# EUROPÄISCHE PATENTSCHRIFT

(11) **EP 1 801 047 B1**
(45) Veröffentlichungstag und Bekanntmachung des Hinweises auf die Patenterteilung: **29.07.2009**
(21) Anmeldenummer: 06022841.8
(22) Anmeldetag: 02.11.2006
(51) Int. Cl.: B65G 47/90, B65G 57/03, B65G 61/00, B65H 31/30

(54) **Stapelgreifer**
Gripper for flat stacked objects
Dispositif de préhension pour des objets plats empilés

(30) Priorität: 20.12.2005 DE 102005060946
(43) Veröffentlichungstag der Anmeldung: 27.06.2007
(60) Teilanmeldung: 08011850.8
(73) Patentinhaber: Gämmerler AG, 82538 Geretsried-Gelting (DE)
(72) Erfinder: Gämmerler, Gunter, 82538 Gelting (DE); Meisel, Ronald, 82431 Kochel am See (DE); Müller, Eckhard, 82319 Starnberg (DE); Schubart, Ralf-Peter, 82431 Kochel am See (DE)
(74) Vertreter: Manitz, Finsterwald & Partner GbR

(56) Entgegenhaltungen:
- EP-A1- 1 155 984
- US-B2- 6 871 893

## Beschreibung

Die vorliegende Erfindung betrifft einen Stapelgreifer, insbesondere für ungebundene Druckprodukte, mit einem ersten und einem zweiten Paar von nebeneinander angeordneten Auflageelementen, die verstellbar an einem Querträger befestigt sind. Ein solcher Stapelgreifer ist beispielsweise aus der US 6,871,893 B2 bekannt.

Es ist die Aufgabe der vorliegenden Erfindung, einen Stapelgreifer der vorstehend genannten Art so zu verbessern, dass bei schonender Behandlung der Produkte eine platzsparende Palettierung mit größtmöglicher Ausnutzung der zur Verfügung stehenden Palettengrundfläche möglich ist.

Die Lösung dieser Aufgabe erfolgt durch die Merkmale des Anspruchs 1 und insbesondere dadurch, dass eine Verstellvorrichtung mit einem Antrieb vorgesehen ist, mit welchem der Abstand zwischen den beiden Paaren von nebeneinander angeordneten Auflageelementen veränderbar ist, ohne dass dabei der seitliche Abstand der Auflageelemente eines Paares verändert wird.

Mit dem erfindungsgemäßen Stapelgreifer können so genannten Doppelstapel, d.h. zwei nebeneinander angeordnete Stapel von ungebundenen Druckprodukten, gehandhabt werden, wobei es durch den Antrieb möglich ist, nach Ergreifen der beiden voneinander beabstandeten Stapel diese aufeinander zu zu bewegen, bis der Abstand zwischen den beiden Stapeln eliminiert ist. Da hierbei die beiden unterhalb eines Stapels befindlichen Auflageelemente nicht relativ zueinander verschoben werden, bleibt jeder Stapel unversehrt.

Mit dem erfindungsgemäßen Stapelgreifer ist es möglich, beispielsweise nach Ergreifen der Stapel und während der Übergabe der Stapel an eine Palette den Abstand zwischen den beiden Stapeln zu eliminieren, so dass bei Ablegen des Doppelstapels auf der Palette der zur Verfügung stehende Raum bestmöglich ausgenutzt wird.

Vorteilhafte Ausführungsformen der Erfindung sind in der Beschreibung, der Zeichnung sowie den Unteransprüchen beschrieben.

Nach einer ersten vorteilhaften Ausführungsform können die Auflageelemente eines Paares an einer Traverse manuell verstellbar befestigt sein, wobei die Traverse von dem Antrieb jeweils in Richtung des anderen Paares bzw. in Richtung der anderen Traverse bewegbar ist. Diese Ausführungsform stellt einerseits eine konstruktiv einfache und damit kostengünstige Lösung dar. Andererseits ist auf einfache Weise gewährleistet, dass auch Stapel mit unterschiedlichen Formaten zuverlässig gehandhabt werden können, da die Auflageelemente eines Paares an der Traverse manuell verstellbar befestigt sind, d.h. der Relativabstand zweier benachbarter Auflageelemente eines Paares einstellbar ist.

Nach einer weiteren vorteilhaften Ausführungsform ist zwischen den Auflageelementen jeweils eines Paares ein vertikal verstellbares Andruckelement vorgesehen. Mit einem solchen Andruckelement lässt sich der Stapel von insbesondere ungebundenen Druckprodukten von oben fixieren, so dass der Stapelgreifer mit vergleichsweise hohen Geschwindigkeiten in Richtung der Palette bzw. in Richtung der Abgabeposition bewegt werden kann.

Nach einer weiteren vorteilhaften Ausführungsform ist eine Führung eines solchen Andruckelementes in eine Halterung eines Auflageelementes integriert. Auf diese Weise muss für die Halterung des Andruckelementes keine separate Konstruktion vorgesehen werden.

Sofern die Auflageelemente flexible Auflagebänder aufweisen, die am vorderen Ende der Auflageelemente abrollen, ist eine besonders schonende Handhabung der Stapel gewährleistet, da keine Relativbewegung zwischen Stapel und Stapelauflage stattfindet, wenn die Auflageelemente zurückgezogen werden, um den Stapel abzulegen.

Nach einer weiteren vorteilhaften Ausführungsform ist für die Druckprodukte ein hinterer Anschlag vorgesehen, wobei ein Sensor ein Anschlagen von Druckprodukten an dem Anschlag detektiert. Bei dieser Ausführungsform ist sicher gewährleistet, dass der Stapel von Druckprodukten bis zum hinteren Ende der Auflageelemente bewegt wird, bevor ein Andruckelement den Stapel von oben fixiert. Gleichzeitig ist bei dieser Ausführungsform eine sehr schnell Verfahrensweise möglich, da die Auflageelemente sofort abgesenkt werden können, wenn der Sensor ein Signal abgibt.

Bei einem erfindungsgemäßen Verfahren zum Palettieren mit einem vorstehend beschriebenen Stapelgreifer wird jeweils ein Stapel von Druckprodukten auf ein Paar von Auflageelementen aufgebracht und anschließend werden die beiden Paare mit Hilfe des Antriebs der Verstellvorrichtung aufeinander zu bewegt, nachdem ein vertikal verstellbares Andruckelement auf die Oberseite jedes Stapels abgesenkt wurde. Auf diese Weise ist sichergestellt, dass jeder Einzelstapel zunächst fixiert wird und anschließend der Abstand zwischen den beiden Stapeln eliminiert wird. Auf vorteilhafte Weise kann der Antrieb dann betätigt werden, wenn der Stapelgreifer mit Hilfe eines Manipulators, beispielsweise eines Roboterarms, von einer Übernahmeposition in eine Ablageposition bewegt wird.

Nach einer weiteren vorteilhaften Variante des Verfahrens wird das vertikal verstellbare Andruckelement während der Bewegung des Manipulators bzw. des Stapelgreifers stärker an den Stapel angedrückt als in der Ablageposition, in der die Auflageelemente unter dem Stapel weggezogen werden. Bei dieser Verfahrensweise ist sichergestellt, dass sich die einzelnen Druckprodukte der Stapel während der Bewegung des Stapelgreifers nicht verschieben und dass ein schonendes Ablegen der Stapel auf der Palette oder auf darauf bereits angeordneten Stapeln erfolgen kann.

Nach einem weiteren Aspekt der Erfindung betrifft diese eine Übergabeeinheit für einen Stapelgreifer der vorstehend beschriebenen Art, wobei diese Übergabeeinheit eine Verschiebeeinheit aufweist, auf der ein Schlitten horizontal verschiebbar angeordnet ist. Auf dem Schlitten sind nebeneinander zumindest zwei Ablagemittel für jeweils einen Stapel vorgesehen, und es ist ferner auf dem Schlitten eine Ausstoßeinrichtung angeordnet, die ein Ausstoßen von auf den Ablagemitteln befindlichen Stapeln auf die Auflageelemente des Stapelgreifers ermöglicht.

Mit dieser erfindungsgemäßen Übergabeeinheit ist es möglich, Stapel von Papierprodukten, die von einer Förderlinie angefördert werden, zu einem Doppelstapel zu formen und anschließend an den Stapelgreifer zu übergeben. Hierzu wird zunächst ein ankommender Stapel auf einem Ablagemittel angeordnet und anschließend wird der Schlitten horizontal verschoben, so dass der nachfolgend angeförderte Stapel auf dem benachbarten Ablagemittel angeordnet werden kann. Im Anschluss hieran können die beiden Stapel von der Ausstoßeinrichtung auf die Auflageelemente des Stapelgreifers ausgestoßen werden.

Nach einer vorteilhaften Ausführungsform können die Ablagemittel parallel nebeneinander angeordnete Förderbänder umfassen, um die Stapel von der Übergabeeinheit auf den Stapelgreifer zu übergeben.

Nach einer weiteren vorteilhaften Ausführungsform ist zumindest ein vertikal und horizontal verfahrbarer Ausstoßer vorgesehen, der den Ausstoßvorgang unterstützt. Durch die vertikale Verfahrbarkeit des Ausstoßers kann dieser oberhalb des Ablagemittels montiert werden und zum Ausstoßen horizontal abgesenkt werden.

Nach einer weiteren vorteilhaften Ausführungsform sind auf dem Schlitten für jeden Stapel jeweils zwei aufeinander zu bewegbare bzw. seitlich zustellbare Andruckelemente vorgesehen. Mit diesen Andruckelementen kann ein Einzelstapel seitlich ausgerichtet und insbesondere auch festgehalten werden, wenn der Schlitten seitlich verschoben wird.

Nach einer weiteren vorteilhaften Ausführungsform kann auf dem Schlitten eine von einem ersten und einem zweiten Sensor begrenzte Bremsstrecke vorgesehen sein, in der die Förderbänder mit reduzierter Geschwindigkeit angetrieben werden. Eine solche Bremsstrecke ermöglicht eine hohe Verfahrensgeschwindigkeit, da der Stapel zunächst mit der Förderlinie in die Übergabeeinheit gefördert werden kann und erst bei Erreichen der Bremsstrecke auf eine sehr niedrige Geschwindigkeit abgebremst und bei Erreichen des Endes der Bremsstrecke angehalten wird.

Nach einer weiteren vorteilhaften Ausführungsform kann der Abstand zwischen den Ablagemitteln durch ein Stellelement, insbesondere manuell einstellbar sein, so dass auch im Bereich der Übergabeeinheit eine Formateinstellung möglich ist.

Nachfolgend wird die vorliegende Erfindung rein beispielhaft anhand vorteilhafter Ausführungsformen und unter Bezugnahme auf die beigefügten Zeichnungen beschrieben.

Es zeigen:
- Fig. 1: eine Seitenansicht eines Stapelgreifers;
- Fig. 2: eine Vorderansicht des Stapelgreifers von Fig. 1;
- Fig. 3: eine Rückansicht des Stapelgreifers von Fig. 1 von hinten;
- Fig. 4: eine der Fig. 2 entsprechende Vorderansicht nach Betätigung des Antriebs;
- Fig. 5: eine Vorderansicht einer Übergabeeinheit;
- Fig. 6: eine Seitenansicht der Übergabeeinheit von Fig. 5;
- Fig. 7: eine der Fig. 5 entsprechende Vorderansicht nach Verschieben des Schlittens; und
- Fig. 8: eine Fig. 6 entsprechende Seitenansicht mit einem Stapelgreifer in Übernahmeposition.

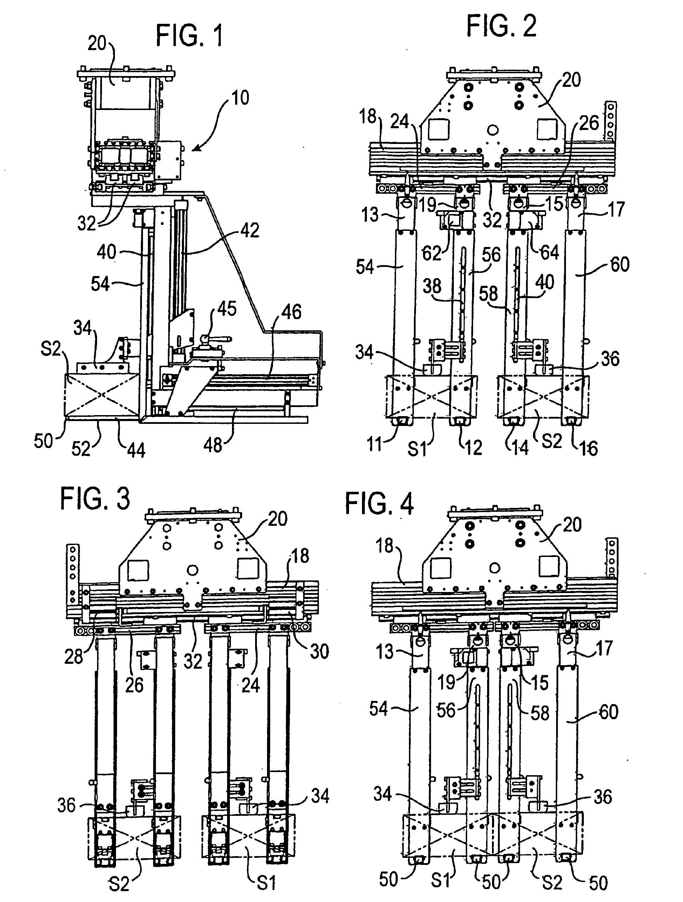

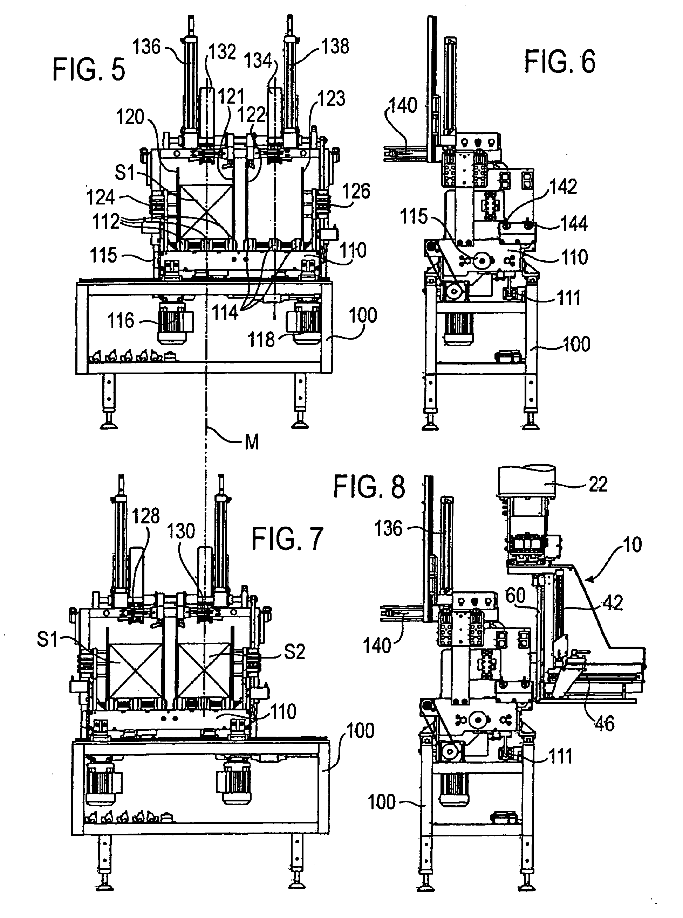

Der in Fig. 1 bis 4 dargestellte Stapelgreifer 10 weist ein erstes Paar von nebeneinander angeordneten Auflageelementen 11 und 12 und ein zweites Paar von nebeneinander angeordneten Auflageelementen 14 und 16 auf, wobei die beiden Paare von Auflageelementen über vertikale Träger 13, 19, 15 und 17 verstellbar an einem Querträger 18 befestigt sind. Der Querträger 18 ist wiederum an einem Greiferflansch 20 befestigt, mit dem der Stapelgreifer 10 an einem Roboterarm 22 (vgl. Fig. 8) montiert werden kann.

Jedes Paar von Auflageelementen 11, 12 und 14, 16 ist an einer zugehörigen Traverse 24 und 26 manuell verstellbar befestigt, um eine Formatverstellung zu gewährleisten. Hierbei ist jede Traverse 24 und 26 von einer Verstellvorrichtung horizontal entlang des Querträgers 18 verschiebbar, so dass die beiden Paare von Auflageelementen aufeinander zu und voneinander weg bewegt werden können, ohne dass sich der Relativabstand bzw. der seitliche Abstand der Auflageelemente 11 und 12 bzw. 14 und 16 dabei ändert.

Die Verstellvorrichtung weist einen Antrieb in Form zweier Pneumatikzylinder 28 und 30 (vgl. Fig. 3) auf, um die beiden Traversen 24 und 26 entlang einer Linearführung 32 zu verschieben, die an dem Querträger 18 befestigt ist.

Zwischen jeweils zwei Auflageelementen 11, 12 und 14, 16 eines Paares ist jeweils ein vertikal verstellbares Andruckelement 34 und 36 vorgesehen, das jeweils in einer Linearführung 38, 40 von einem Pneumatikzylinder 42 (vgl. Fig. 1) vertikal verstellbar ist.

Die Auflageelemente 11 bis 16 umfassen jeweils einen Auflagefinger 44, der mit Hilfe eines Pneumatikzylinders 46 horizontal über eine Linearführung 48 bewegbar ist. Am vorderen und am hinteren Ende der Auflagefinger 44 ist jeweils eine Umlenkrolle 50 vorgesehen (in den Figuren ist nur die vordere Umlenkrolle zu erkennen, um die je ein dünner Flachriemen 52 geführt ist, dessen zwei freie Enden am Greifer fixiert sind. Zum Zurückziehen der Auflagefinger 44 wird der Pneumatikzylinder 46 zurückgezogen, wobei der Flachriemen 52 über die Umlenkrollen 50 abrollt, so dass keine Relativbewegung zwischen dem oberen Trum des Flachriemens 52 und dem Stapel stattfindet. Mit Hilfe eines Klemmhebels 45 kann eine Formatverstellung der Auflagefinger 44 erfolgen.

Schließlich ist an jedem Träger 13, 19, 15 und 17 eine Anschlagplatte 54, 56, 58 und 60 vorgesehen, die jeweils als hinterer Anschlag für die auf den Auflageelementen 11 bis 16 befindlichen Stapel S 1 und S2 dient. An dem Träger 19 ist ferner ein Sensor 62 in Form einer Laserreflexionslichtschranke vorgesehen, der ein Anschlagen von Druckprodukten, d.h. ein Anschlagen des Stapels S 1 an den Anschlagplatten 54 und 56 detektiert. In gleicher Weise ist an dem Träger 15 eine Laserreflexionslichtschranke 64 befestigt, die ein Anschlagen des Stapels S2 an den Anschlagplatten 58 und 60 detektiert.

Die Fig. 5 bis 8 zeigen eine Übergabeeinheit für den vorstehend beschriebenen Stapelgreifer, die dazu dient, einerseits aus in einer Einzelförderlinie angeförderten Stapeln aus Druckereiprodukten Doppelstapel zu bilden und anschließend diese Doppelstapel an den Stapelgreifer zu übergeben. Fig. 8 zeigt eine Seitenansicht der Übergabeeinheit, wobei der Stapelgreifer 10, der vorstehend beschrieben wurde, mittels eines nur angedeuteten Roboterarms 22 in die Übernahmeposition bewegt worden ist, in der die gebildeten Doppelstapel übernommen werden können.

Wie die Fig. 5 bis 8 zeigen, weist die bevorzugte Ausführungsform einer Übergabeeinheit ein Grundgestell 100 auf, auf dem ein Schlitten 110 mittels eines Pneumatikzylinders 111 von der in Fig. 5 dargestellten rechten Position in die in Fig. 7 dargestellte linke Position horizontal verschiebbar ist. Auf dem Schlitten 110 sind parallel nebeneinander zwei Ablagemittel für jeweils einen Stapel S 1 und S2 vorgesehen, die beim dargestellten Ausführungsbeispiel jeweils drei Transportbänder 112 und 114 umfassen, wobei die Transportbänder 112 von einem Motor 116 und die Transportbänder 114 von einem Motor 118 angetrieben werden. Wie zu erkennen ist, kann der Stapel S 1 auf der durch die Transportbänder 112 gebildeten Ablage abgelegt werden, während der Stapel S2 (vgl. Fig. 7) auf den Transportbändern 114 abgelegt werden kann. Die horizontale Relativposition der einzelnen Transportbänder 112 und 114 auf dem Schlitten 110 ist mit Hilfe eines Handrades 115 zur Formatverstellung einstellbar.

Zu beiden Seiten beider Ablagemittel 112 und 114 sind jeweils zwei Andruckplatten 120, 121 und 122 sowie 123 angeordnet. Die beiden äußersten Andruckplatten 120 und 123 können durch Pneumatikzylinder 124 und 126 in Richtung der Stapel bewegt werden, während die beiden inneren Andruckplatten 121 und 122 durch oberhalb von den Andruckplatten angeordnete Pneumatikzylinder 128 und 130 (vgl. Fig. 7) in Richtung der Stapel bewegt werden können.

In den Fig. 5 und 7 ist ferner eine Ausstoßeinrichtung erkennbar, die zwei Ausstoßplatten 132 und 134 aufweist, die jeweils über einen Pneumatikzylinder 136 und 138 vertikal verschiebbar sind. Ferner sind beide Ausstoßplatten 132 und 134 über jeweils einen zugeordneten Pneumatikzylinder 140 (vgl. Fig. 6 und 8) in Ausstoßrichtung horizontal verfahrbar.

Weiterhin ist auf dem Schlitten 110 eine Bremsstrecke vorgesehen, die durch eine erste Lichtschranke 142 (vgl. Fig. 6) und eine zweite Lichtschranke 144 begrenzt wird. Diese beiden Lichtschranken erfassen für jede Auflage getrennt das Einfahren eines Stapels, wobei der Stapel bei Passieren der Lichtschranke 142 abgebremst und bei Erreichen der Lichtschranke 144 gestoppt wird.

In den Fig. 5 und 7 ist die Mittelachse einer ankommenden Förderlinie strichpunktiert dargestellt und mit dem Bezugszeichen M bezeichnet. Wie man erkennen kann, verläuft die Linie M, d.h. die Mittelachse der ankommenden Förderlinie jeweils durch die Mitte der beiden Ablagemittel, wenn sich der Schlitten in seinen beiden Endpositionen befindet.

Nachfolgend wird die Betriebsweise der vorstehend beschriebenen Übergabeeinheit und des vorstehend beschriebenen Stapelgreifers beschrieben, wobei bemerkt sei, dass die in den Fig. 1 bis 4 sowie 5 bis 8 dargestellten Stapel S 1 und S2 aus zeichnerischen Gründen unterschiedlich groß dargestellt sind, dass es sich jedoch in Wirklichkeit um die gleichen Stapel handelt.

Bezug nehmend auf Fig. 5 wird zunächst ein erster Stapel S 1 von einer ankommenden Einzelförderlinie (nicht dargestellt) in die Übergabeeinheit gefördert und der Stapel S 1 wird von den Transportbändern 112 übernommen und mit der Geschwindigkeit der Förderlinie bis zu der ersten Lichtschranke 142 weitertransportiert. Bei Erreichen dieser ersten Lichtschranke 142 wird die Geschwindigkeit der Transportbänder stark verringert und der Stapel S 1 wird mit dieser geringen Geschwindigkeit bis zu der zweiten Lichtschranke 144 gefördert. Bei Erreichen dieser zweiten Lichtschranke wird der Stapel gestoppt, d.h. die Transportbänder 112 werden angehalten.

Nunmehr kann der auf der durch die Transportbänder 112 gebildeten Auflage befindliche Stapel S 1 mit Hilfe der Andruckplatten 120 und 121 seitlich ausgerichtet und festgehalten werden, indem die Pneumatikzylinder 124 und 128 (Fig. 7) aktiviert werden. Die gesamte auf dem Schlitten 110 befindliche Einheit wird anschließend in die in Fig. 7 dargestellte Position verschoben, wobei die Andruckplatten 120 und 121 an den Stapel S 1 angestellt bleiben. In der linken Endposition des Schlittens 110 befindet sich wiederum die Mitte der durch die Transportbänder 114 gebildeten Auflage auf der Mittellinie M der ankommenden Förderlinie, so dass ein nachfolgender Stapel S2 in die Übergabeeinheit einfahren und von den Transportbändern 114 übernommen werden kann. Anschließend wird der Stapel S2 von den Andruckplatten 122 und 123 ausgerichtet, indem die Pneumatikzylinder 130 und 126 betätigt werden.

Im nachfolgenden Schritt werden die Ausstoßplatten 132 und 134 durch Betätigen der Pneumatikzylinder 136 und 138 nach unten abgesenkt, woraufhin durch Betätigen der Pneumatikzylinder 140 die beiden Stapel S 1 und S2 an den Stapelgreifer 10 übergeben werden können, der von dem Roboterarm 22 zuvor in die passende Übernahmeposition bewegt worden ist. Vor diesem Vorgang werden die Andruckplatten 120 bis 123 leicht zurückgezogen, so dass diese die beiden Stapel S 1 und S2 nicht mehr festhalten, jedoch eine Führung bieten. Gleichzeitig werden beim Übergabevorgang die Transportbänder 112 und 114 bewegt, um eine Relativbewegung zwischen den beiden Stapeln S 1 und S2 und den Transportbändern zu verhindern. Beim Übergeben der beiden Stapel S 1 und S2 wird von den Sensoren 62 und 64 (Fig. 2) überwacht, wann die Stapel die Anschlagplatten 54, 56 bzw. 58 und 60 erreicht haben. Wenn dies der Fall ist, werden die Andruckelemente 34 und 36 durch Aktivieren der Pneumatikzylinder 42 abgesenkt, so dass die in den Fig. 1 bis 3 dargestellte Position gegeben ist.

Nachdem die Andruckelemente 34 und 36 mit erhöhtem Druck gegen Stapel S 1 und S2 angedrückt worden sind, kann der Stapelgreifer 10 von dem Roboterarm 22 in Richtung der Abgabeposition oberhalb einer Palette bewegt werden. Während dieser Bewegung werden die Pneumatikzylinder 28 und 30 aktiviert, so dass die beiden Traversen 24 und 26 aufeinander zu bewegt werden können, wodurch der Zwischenraum zwischen den beiden Stapeln S 1 und S2 eliminiert wird.

Oberhalb der Abgabeposition wird der Anpressdruck der Andruckelemente 34 und 36 reduziert und die Pneumatikzylinder 46 werden aktiviert, so dass das untere Trum der Flachriemen 52 zurückgezogen werden kann, wobei sich die Auflagefinger 44 ebenfalls nach hinten verschieben. Nachdem die Auflagefinger 44 vollständig zurückgezogen worden sind, kann der Stapelgreifer von dem Roboterarm 22 wieder in Richtung der Übergabeeinheit bewegt werden.

Es versteht sich von selbst, dass die bei der vorstehend beschriebenen bevorzugten Ausführungsform genannten konstruktiven Bauteile nur beispielhaft genannt sind. So können beispielsweise statt der Pneumatikzylinder auch andere Stellelemente eingesetzt werden und die Auflage muss nicht notwendigerweise Transportbänder umfassen.

### Bezugszeichenliste

- 10: Stapelgreifer
- 11, 12, 14, 16: Auflageelemente
- 13, 15, 17: Träger
- 18: Querträger
- 19: Träger
- 20: Greiferflansch
- 22: Roboterarm
- 24, 26: Traverse
- 28, 30: Pneumatikzylinder
- 32: Linearführung
- 34, 36: Andruckelemente
- 38, 40: Linearführung
- 42: Pneumatikzylinder
- 44: Auflagefinger
- 45: Klemmhebel
- 46: Pneumatikzylinder
- 48: Linearführung
- 50: Umlenkrollen
- 52: Flachriemen
- 54, 56, 58, 60: Anschlagplatten
- 62, 64: Sensor
- 100: Grundgestell
- 110: Schlitten
- 111: Pneumatikzylinder
- 112, 114: Transportbänder
- 115: Handrad
- 116, 118: Antriebsmotor
- 120 - 123: Andruckplatten
- 124 - 130: Pneumatikzylinder
- 132, 134: Ausstoßplatten
- 136, 138: Pneumatikzylinder
- 140: Pneumatikzylinder
- 142, 144: Lichtschranken

- M: Mittelachse
- S1, S2: Stapel

## Patentansprüche

1. Stapelgreifer, insbesondere für ungebundene Druckprodukte (S1, S2), mit einem ersten und einem zweiten Paar von nebeneinander angeordneten Auflageelementen (11, 12; 14, 16), die verstellbar an einem Querträger (18) befestigt sind,
**dadurch gekennzeichnet, dass**
eine Verstellvorrichtung mit einem Antrieb (28, 30) vorgesehen ist, mit welcher der Abstand zwischen den beiden Paaren (11, 12; 14, 16) veränderbar ist, ohne dass dabei der seitliche Abstand der Auflageelemente eines Paares verändert wird.

2. Stapelgreifer nach Anspruch 1,
**dadurch gekennzeichnet, dass**
die Auflageelemente eines Paares (11, 12; 14, 16) an einer Traverse (24, 26) manuell verstellbar befestigt sind, die von dem Antrieb (28, 30) in Richtung des anderen Paares (14, 16; 11, 12) bewegbar ist.

3. Stapelgreifer nach Anspruch 1 oder 2,
**dadurch gekennzeichnet, dass**
oberhalb und insbesondere zwischen den Auflageelementen jeweils eines Paares (11, 12; 14, 16) ein vertikal verstellbares Andruckelement (34, 36) vorgesehen ist.

4. Stapelgreifer nach Anspruch 3,
**dadurch gekennzeichnet, dass**
eine Führung (38, 40) des Andruckelementes (34, 36) in eine Halterung (19, 15) eines Auflageelementes (12, 14) integriert ist.

5. Stapelgreifer nach zumindest einem der vorstehenden Ansprüche,
**dadurch gekennzeichnet, dass**
die Auflageelemente (11 - 16) flexible Flachriemen (52) aufweisen, die am vorderen Ende (50) der Auflageelemente abrollen.

6. Stapelgreifer nach zumindest einem der vorstehenden Ansprüche,
**dadurch gekennzeichnet, dass**
ein Anschlag (54 - 60) für die Druckprodukte (S1, S2) vorgesehen ist, und dass ein Sensor, insbesondere eine Laserreflexionslichtschranke (62, 64), vorgesehen ist, der ein Anschlagen von Druckprodukten (S1, S2) an dem Anschlag detektiert.

7. Stapelgreifer nach zumindest einem der vorstehenden Ansprüche,
**dadurch gekennzeichnet, dass**
die Auflageelemente (11 - 16) mittels eines Antriebs (24, 26, 28, 30) verstellbar sind und dass die Auflageelemente an dem Antrieb manuell verstellbar befestigt sind.

8. Verfahren zum Palettieren mit einem Stapelgreifer nach zumindest einem der vorstehenden Ansprüche, wobei jeweils ein Stapel von Druckprodukten auf ein Paar von Auflageelementen aufgebracht wird und die beiden Paare mit Hilfe des Antriebs der Verstellvorrichtung aufeinander zu bewegt werden, nachdem ein vertikal verstellbares Andruckelement auf die Oberseite jedes Stapels abgesenkt wurde.

9. Verfahren nach Anspruch 8,
**dadurch gekennzeichnet, dass**
der Antrieb betätigt wird, während der Stapelgreifer mit Hilfe eines Manipulators von einer Übernahmeposition in eine Ablageposition bewegt wird.

10. Verfahren nach Anspruch 8 oder 9,
**dadurch gekennzeichnet, dass**
das vertikal verstellbare Andruckelement während der Bewegung des Manipulators stärker als in einer Ablageposition angedrückt wird.

11. Verfahren nach Anspruch 8, 9 oder 10,
**dadurch gekennzeichnet, dass**
das vertikal verstellbare Andruckelement auf die Oberseite jedes Stapels angedrückt wird, nachdem ein Sensor ein Anschlagen von Druckprodukten an einem Anschlag des Stapelgreifers detektiert hat.

## Claims

1. A stack gripper, in particular for unbound printed products (S1, S2), comprising a first pair and a second pair of support elements (11, 12; 14, 16) arranged next to one another and adjustably fastened to a transverse carrier (18),
**characterized in that**
an adjustment apparatus is provided which has a drive (28, 30) with which the spacing between the two pairs (11, 12; 14, 16) can be changed without the lateral spacing of the support elements of a pair being changed.

2. A stack gripper in accordance with claim 1, **characterized in that** the support elements of a pair (11, 12; 14, 16) are manually adjustably fastened to a crossbeam (24, 26) which is movable by the drive (28, 30) in the direction of the other pair (14, 16; 11, 12).

3. A stack gripper in accordance with claim 1 or claim 2, **characterized in that** a vertically adjustable pressing element (34, 36) is provided above and in particular between the support elements of a respective pair (11, 12; 14, 16).

4. A stack gripper in accordance with claim 3, **characterized in that** a guide (38, 40) of the pressing element (34, 36) is integrated into a holder (19, 15) of a support element (12, 14).

5. A stack gripper in accordance with at least one of the preceding claims, **characterized in that** the support elements (11 - 16) comprise flexible flat belts (52) which roll off at the front end (50) of the support elements.

6. A stack gripper in accordance with at least one of the preceding claims, **characterized in that** a stop (54 - 60) is provided for the printed products (S1, S2); and **in that** a sensor, in particular a laser reflection light barrier (62, 64) is provided which detects an abutment of printed products (S1, S2) at the stop.

7. A stack gripper in accordance with at least one of the preceding claims, **characterized in that** the contact elements (11 - 16) are adjustable by means of a drive (24, 26, 28, 30); and **in that** the support elements are manually adjustably fastened to the drive.

8. A method of palletization comprising a stack gripper in accordance with at least one of the preceding claims, with in each case a stack of printed products being put onto a pair of support elements and the two pairs being moved toward one another with the help of the drive of the adjustment device after a vertically adjustable pressing element was lowered onto the upper side of each stack.

9. A method in accordance with claim 8, **characterized in that** the drive is actuated while the stack gripper is moved from a take-over position into a stacking position with the help of a manipulator.

10. A method in accordance with claim 8 or claim 9, **characterized in that** the vertically adjustable pressing element is pressed on more strongly during the movement of the manipulator than in a placement position.

11. A method in accordance with claim 8, claim 9 or claim 10, **characterized in that** the vertically adjustable pressing element is pressed onto the upper side of each stack after a sensor has detected an abutment of printed products at a stop of the stack gripper.

## Revendications

1. Dispositif de préhension pour objets empilés, en particulier pour des produits d'imprimerie non reliés (S1, S2), comprenant une première paire et une seconde paire d'éléments d'appui (11, 12 ; 14, 16) agencés les uns à côté des autres, lesquelles sont fixées de façon réglable sur un support transversal (18),
**caractérisé en ce qu'**il est prévu un dispositif de réglage avec un entraînement (28, 30), au moyen duquel la distance entre les deux paires (11, 12 ; 14, 16) est modifiable, sans modifier alors la distance latérale des éléments d'appui d'une paire.

2. Dispositif de préhension pour objets empilés selon la revendication 1, **caractérisé en ce que** les éléments d'appui d'une paire (11, 12 ; 14, 16) sont fixés de façon manuellement réglable sur une traverse (24, 26) qui est déplaçable par l'entraînement (28, 30) en direction de l'autre paire (14, 16 ; 11, 12).

3. Dispositif de préhension pour objets empilés selon la revendication 1 ou 2,
**caractérisé en ce qu'**il est prévu un élément de pressage (34, 36) réglable verticalement, au-dessus et en particulier entre les éléments d'appui d'une paire respective (11, 12 ; 14, 16).

4. Dispositif de préhension pour objets empilés selon la revendication 3, **caractérisé en ce qu'**un guidage (38, 40) de l'élément de pressage (34, 36) est intégré dans une monture (19, 15) d'un élément d'appui (12, 14).

5. Dispositif de préhension pour objets empilés selon l'une au moins des revendications précédentes,
**caractérisé en ce que** les éléments d'appui (11, 16) comprennent des courroies planes flexibles (52) qui se déroulent à l'extrémité antérieure (50) des éléments d'appui.

6. Dispositif de préhension pour objets empilés selon l'une au moins des revendications précédentes,
**caractérisé en ce qu'**il est prévu une butée (54-60) pour les produits d'imprimerie (S1, S2), et **en ce qu'**il est prévu un détecteur, en particulier une barrière lumineuse à laser par réflexion (62, 64) qui détecte une venue en butée des produits d'imprimerie (S1, S2) contre la butée.

7. Dispositif de préhension pour objets empilés selon l'une au moins des revendications précédentes,
**caractérisé en ce que** les éléments d'appui (11-16) sont réglables au moyen d'un entraînement (24, 26, 28, 30), et **en ce que** les éléments d'appui sont fixés de façon manuellement réglable sur l'entraînement.

8. Procédé pour mettre en palette des objets au moyen d'un dispositif de préhension pour objets empilés selon l'une au moins des revendications précédentes, dans lequel un empilement respectif de produits d'imprimerie est placé sur une paire d'éléments d'appui, et les deux paires sont déplacées l'une vers l'autre à l'aide de l'entraînement du dispositif de réglage, après avoir descendu un élément de pressage, réglable verticalement, sur la face supérieure de chaque empilement.

9. Procédé selon la revendication 8,
**caractérisé en ce que** l'entraînement est actionné pendant que le dispositif de préhension pour objets empilés est déplacé à l'aide d'un manipulateur depuis une position de prise vers une position de dépose.

10. Procédé selon la revendication 8 ou 9,
**caractérisé en ce que** l'élément de pressage réglable verticalement est pressé pendant le déplacement du manipulateur plus fortement que dans une position de dépose.

11. Procédé selon la revendication 8, 9 ou 10,
**caractérisé en ce que** l'élément de pressage réglable verticalement est pressé sur la face supérieure de chaque empilement après qu'un détecteur ait détecté une venue en butée des produits d'imprimerie contre une butée du dispositif de préhension pour objets empilés.
